Europäisches Patentamt

European Patent Office

Office européen des brevets

(19)

(11) Veröffentlichungsnummer: **0 476 280 A2**

(12) # EUROPÄISCHE PATENTANMELDUNG

(21) Anmeldenummer: **91112776.9**

(22) Anmeldetag: **30.07.91**

(51) Int. Cl.5: **B23Q 5/56**, F15B 15/08, F16H 55/28

(30) Priorität: **24.08.90 DE 4026736**

(43) Veröffentlichungstag der Anmeldung:
**25.03.92 Patentblatt  92/13**

(84) Benannte Vertragsstaaten:
**CH DE FR IT LI**

(71) Anmelder: **Montech AG**
**Gewerbestrasse 12**
**CH-4552 Derendingen(CH)**

(72) Erfinder: **Trenner, Albrecht**
**Kronmattstrasse 15**
**CH-4513 Langendorf(CH)**

(74) Vertreter: **Weiss, Peter, Dr. rer.nat.**
**Patentanwalt Dr. Peter H. Weiss Postfach 12**
**50 Zeppelinstrasse 4**
**W-7707 Engen(DE)**

(54) **Dreheinheit.**

(57) Bei einer Vorrichtung zum Drehen von beispielsweise zu bearbeitenden Werkstücken an einem Träger, welcher von einer Ritzelwelle (30) mit Zahnleisten (34) über eine Zahnstange (18) in Drehung versetzbar ist, soll die Zahnstange (18) in einer Zylinderbohrung (2) eines Gehäuses (1) gleitbar zwischen die Zylinderbohrung (2) verschließenden Deckel (3, 4) senkrecht zu einer Achse der Ritzelwelle (30) angeordnet sein. Jeweils an der Zahnstange (18) an jedem Ende vorgesehene Kolben (8, 9) bilden mit einem Deckel (3, 4) eine mit Druckmedium beaufschlagbare Kammer (11, 12) aus. Die Zahnleisten (34) der Ritzelwelle (30) kämmen die Zahnung (28) der Zahnstange (18) zwischen den beiden Kolben (8, 9). Dabei soll der Abstand von Zahnung (28) und Ritzelwelle (30, 90) bzw. Zahnleisten (34) veränderbar sein.

Fig.1

EP 0 476 280 A2

Die Erfindung betrifft eine Vorrichtung zum Drehen von beispielsweise zu bearbeitenden Werkstücken an einem Träger, welcher von einer Ritzelwelle mit Zahnleisten über eine Zahnstange in Drehung versetzbar ist, wobei die Zahnstange in einer Zylinderbohrung eines Gehäuses gleitbar zwischen die Zylinderbohrung verschliessenden Deckeln senkrecht zu einer Achse der Ritzelwelle angeordnet ist und jeweils an der Zahnstange an jedem Ende vorgesehenen Kolben mit einem Deckel eine mit Druckmedium beaufschlagbare Kammer ausbilden und wobei die Zahnleisten der Ritzelwelle die Zahnung der Zahnstange zwischen den beiden Kolben kämmen.

Dreheinheiten dieser Art sind bekannt und werden vorwiegend für die Erzeugung von Rotationsbewegungen eingesetzt, wobei die Rotationsbewegungen nur innerhalb eines begrenzten Winkels erfolgen. Bei Dreheinheiten dieser Art werden in den meisten Ausführungen die Rotationsbewegungen durch das Zusammenwirken einer Zahnstange und einer Ritzelwelle erzeugt. Vorzugsweise wird eine Zahnstange zwischen zwei Kolben geführt, welche zwischen sich und das Gehäuse verschliessenden Deckeln jeweils eine mit einem Druckmedium beaufschlagbare Kammer ausbilden. Das Druckmedium wird über beispielsweise Näherungsschalter gesteuert, wodurch die Drehrichtung der jeweiligen Rotationsbewegung bestimmt werden.

Da bei der Bearbeitung von Werkstücken hohe Massgenauigkeiten erforderlich sind, ist es notwendig, dass eine entsprechende Drehbewegung in Bezug auf den Drehwinkel exakt einstellbar ist. Um eine solche Massgenauigkeit zu gewährleisten, sind die meisten der Dreheinheiten mit entsprechenden, den Abstand zwischen der Zahnleiste und der abzukämmenden Ritzelwelle bestimmenden Einrichtungen versehen. So sind beispielsweise Einrichtungen bekannt, die durch Verwendung von zwei Zahnstangen ein unter Umständen auftretendes Spiel ausgleichen. Andere Einrichtungen sehen unter der Zahnstange ein Abstützlager vor, welches sich durch entsprechende Federeinrichtungen od. dgl. gegen die Ritzelwelle stützt und auf diese Art und Weise auftretendes Spiel ausgleicht. Der Nachteil dieser Einrichtung ist, dass sie entweder aufwendig oder durch den Anpressdruck der beiden Verzahnungsteile gegeneinander erhöhtem Verschleiss ausgesetzt ist.

Des weiteren ist bei Dreheinheiten dieser Art wichtig, dass die Endlagen gedämpft erreicht werden. Ein abruptes Abbrechen der Drehbewegung führt zu erhöhtem Verschleiss an jenen Verzahnungsstellen, welche in den Endlagen in Eingriff sind und es könnte aufgrund der Trägheit des Werkstückes zum Verschieben desjenigen führen, was zwangsläufig zu einer falschen Bearbeitung dieses Werkstückes führen würde. Um solche gedämpften Endlagen zu erreichen, sind den Dreheinheiten seitlich in Deckeln, welche die Druckkammern verschliessen, Stossdämpfer eingebracht, die jeweils die Linearbewegung der Kolben im Endlagenbereich dämpfen.

Der Nachteil dermassen befestigter Stossdämpfer liegt darin, dass sie nur sehr schwierig abzudichten sind, was immer wieder zu druckmindernden Folgen innerhalb der mit Druckmedium beaufschlagbaren Kammern führt. Da je nach Bearbeitungsweise eines Werkstückes die Endlagen der Drehbewegung entsprechend verändert werden müssen, können Stossdämpfer dieser Art nicht unlösbar in das Gehäuse eingebaut werden. Ein weiteres Problem stellt auch die durch das Anbringen solcher Stossdämpfer erforderliche Grösse einer solchen Dreheinheit dar. Durch das beidseitige Abragen der Stossdämpferhülsen erreicht eine Dreheinheit dieser Art oft eine unerwünschte Baulänge.

Ebenfalls zeigt sich bei Dreheinheiten dieser Art oft als Nachteil, dass zwischen den Endlagen keine Zwischenstellung erreicht werden kann. Dies ist aber oftmals erforderlich bzw. würde sich als kostengünstig bei der Bearbeitung eines Werkstückes erweisen, bei welchem zwei Arbeitsschritte für die Bearbeitung erforderlich sind. Mit einer entsprechenden Zwischenstellung bzw. mit einem entsprechenden Zwischenanschlag könnten beide Arbeitsgänge innerhalb einer Drehbewegung ausgeführt werden.

Der Erfinder hat sich zur Aufgabe gestellt, eine Dreheinheit der genannten Art so zu verbessern, dass die genannten Nachteile entfallen, wobei eine Erweiterung des Einsatzes möglich wird.

Zur Lösung dieser Aufgabe führt, dass der Abstand von Zahnung und Ritzelwelle bzw. Zahnleisten veränderbar ist.

In einem weiteren Ausführungsbeispiel der Erfindung ist vorgesehen, dass zumindest ein Anschlag dem Gehäuse angesetzt ist, der mit einem von der Zahnstange abragenden Mitnehmer zusammenwirkt. Beide Erfindungsgedanken können getrennt oder zusammen in einer Vorrichtung vorgesehen sein.

Eine erfindungsgemässe Dreheinheit bildet in einem Gehäuse eine zylindrische Bohrung aus, in welcher zwischen zwei Kolben eine Zahnstange angeordnet ist. Zwischen den Kolben und das Gehäuse im Bereich der zylindrischen Bohrung verschliessenden Deckeln wird jeweils eine mit Druckmedium beaufschlagbare Kammer ausgebildet. In der Mitte ist in dem Gehäuse eine Bohrung angebracht, durch welche eine Ritzelwelle senkrecht zur Zahnung der Zahnstange verlaufend angeordnet ist. In Gebrauchslage greifen die Verzahung der Ritzelwelle und diejenige der Zahnstange ineinander. Die Zahnstange selbst bildet jeweils an beiden Seiten Zapfen aus, welche in entsprechende Ausnehmungen auf dieser Seite der Kolben eingreifen. Durch die Ausnehmung bilden die Kolben jeweils einen Ringkragen aus. Dabei ist jedoch der Durchmesser der an der Zahnstange angeordneten Zapfen etwas kleiner als der Innendurchmesser des von den Kolben ausgebildeten Ringkragens.

Dadurch lagern die Zapfen nicht passgenau in dem Ringkragen, sondern bilden mit diesen ein entsprechendes Spiel.

Die Zapfen und die Ausnehmungen in den Kolben können durchaus auch anders als rund ausgebildet sein. Wichtig dabei ist nur, dass das Profil der Ausnehmung dem Profil des aufzunehmenden Zapfens in etwa entspricht und einseitig ein Spiel gebildet wird. In jeden Zapfen ist eine Gewindebohrung eingebracht, welche von einem Gewindestift durchgriffen wird. Der Gewindestift liegt der Innenseite des von den Kolben ausgebildeten Ringkragens auf. An dieser Stelle besitzt der Ringkragen seinerseits eine Bohrung, durch welche der Gewindestift in dem Zapfen mittels eines entsprechenden Schraubwerkzeuges erreichbar und manipulierbar ist. Durch entsprechendes Verdrehen des Gewindestiftes kann die Zahnstange in Bezug auf ihren Abstand zur Ritzelwelle im Rahmen des oben beschriebenen Spieles zwischen Zapfen und Ringkragen verändert werden.

Passungenauigkeiten bzw. Toleranzen, die beispielsweise durch die Herstellung der Einzelteile auftreten können, werden auf diese Weise leicht und schnell ausgeglichen.

Entgegengesetzt der Zahnung der Zahnstange ist der Zahnstange mittig ein Mitnehmer angesetzt, welcher einen entsprechenden Schlitz, vorzugsweise in Form eines Langloches im Gehäuse, durchragt. Der Mitnehmer ist beispielsweise durch einen Schraubenbolzen od. dgl. lösbar mit der Zahnstange verbunden. Durch diesen Schlitz sind auch die oben beschriebenen Gewindestifte in den Zapfen durch die Bohrungen im Ringkragen der Kolben erreichbar.

Bei der durch das Beaufschlagen der Kolben mit einem entsprechenden Druckmedium erzeugten Linearbewegung der Zahnstange wird in entsprechendem Maße auch der Mitnehmer bewegt. Im Bereich der Bewegung des Mitnehmers sind am Gehäuse in entsprechenden Führungen, beispielsweise in schwalbenschwanzförmigen Nuten, zumindest ein Anschlag, bevorzugt jedoch zwei Anschläge, nämlich rechts und links des Mitnehmers, vorgesehen. Die Anschläge sind dabei bevorzugt so ausgeformt, daß sie gleichzeitig als Halterung für Stoßdämpfer sowie als Halterung für beispielsweise einen Näherungsschalter dienen. Gleichzeitig sind sie bevorzugt durch Gewindestifte lösbar in der Führung festgelegt. Ihr gegenseitiger Abstand kann somit verändert werden, was gleichzeitig die Länge der Hubbewegung der die Zahnstange führenden Kolben beeinflußt und auch den Winkel der Drehbewegung bestimmt.

Während die Stoßdämpfer den Anschlag bremsen, steuern die Näherungsschalter in den Anschlägen die Zufuhr des Druckmediums in die jeweilige Kammer. Durch dieses Zusammenwirken des Mitnehmers mit dem bzw. den Anschlag/Anschlägen ist innerhalb eines bestimmten maximalen Drehwinkels jede beliebige Endlage schnell und leicht bestimmbar. Durch die Wirkung der Stoßdämpfer einerseits und durch den Steuermechanismus über die Näherungsschalter andererseits wird eine gewünschte Endlage gedämpft und ruckfrei erreicht.

Um eine etwaige Zwischenstellung zwischen den Endlagen zu erreichen, ist einer erfindungsgemäßen Dreheinrichtung ein entsprechendes Anbauelement ansetzbar.

Dieses Anbauelement zur Erzielung einer Zwischenposition der Zahnstange besteht aus einem Gehäuse, welches bevorzugt eine zylindrische Bohrung aufweist und in welcher ein Kolben mit einer Kolbenstange angeordnet ist. Die Kolbenstange durchragt dabei einen Spezialdeckel, welcher zur Kolbenstange hin zumindest einen Dichtring aufweist. In Gebrauchslage wird das Anbauelement mit Hilfe von Gewindebolzen, Gewindeschrauben od. dgl. an der Dreheinheit festgelegt, wobei der Spezialdeckel an die Stelle des Deckels tritt, der zusammen mit dem Kolben die mit Druckmedium beaufschlagbare Kammer ausbildet. Auch diesem Anbauelement für die Erzeugung einer Zwischenposition ist eine Verbindung zu einer Druckmittelquelle zugeordnet, wodurch der Kolben mit der Kolbenstange in diesem Anbauelement mit einem entsprechenden Druckmedium bewegt werden kann. Der Durchmesser des Kolbens für die Festlegung der Zwischenposition ist grösser als der Durchmesser des die Zahnstange führenden Kolbens in der Dreheinheit. Durch diesen Grössenunterschied ist gewährleistet, dass der Druck auf den Kolben für die Zwischenposition grösser ist als der Druck von dem die Zahnstange führenden Kolben.

Zur Herstellung einer Zwischenposition wird der Kolben mit Hilfe des Druckmediums in einem Druckraum in Richtung der Zahnstange bewegt, wobei die mit dem Kolben verbundene Kolbenstange den Deckel in einer entsprechenden Länge durchfährt. Durch die Länge der Kolbenstange wird ein erster Drehwinkel für eine entsprechende Rotationsbewegung der Ritzelwelle bestimmt. Ein Näherungsschalter sorgt auch hier für die elektrische Überprüfung der erreichten Zwischenposition.

Beim Einragen der Kolbenstange in die Kammer zwischen Deckel und die Zahnstangen führenden Kolben wird die Zahnstange so weit geführt, bis der Kolben auf die Stirnfläche der Kolbenstange aufschlägt. Da, wie vorher erwähnt, der Durchmesser des die Zwischenposition bestimmenden Kolbens grösser ist als derjenige des die Zahnstange führenden Kolbens, kann der Druck auf diesen Kolben dem Druck, welcher von dem die Zahnstange führenden Kolben ausgeübt wird, standhalten. Somit ist eine Zwischenstellung erreicht, wobei der von der Zahnstange abragende Mitnehmer sich zwischen den beiden Anschlägen frei befindet. Nach der Bearbeitung des Werkstückes in dieser Position wird im Druckraum des Anbauelements über einen Steuermechanismus ein entsprechendes Ventil geöffnet, so dass das Druckmedium aus dem Druckraum entströmen kann. Die Kraft des die Zahnstange führenden Kolbens kann die ihr entgegenwirkende Kraft der Zwischenposition überwinden und die Kolbenstange in das Anbauelement zurückschieben. Jetzt ist die andere Endlage im Bearbeitungsprozess eines Werkstückes erreichbar.

In einem weiteren Ausführungsbeispiel einer erfindungsgemässen Dreheinheit ist dieser eine Anschlussplatte für eine Speisung der am Träger festgelegten Handlinggeräte mit Druckmedium aufgesetzt. Durch eine solche Einrichtung erübrigt sich der Einsatz von Schläuchen für die Zuführung des Druckmediums beispielsweise für einen Greifer. Die Anschlussplatte wirkt hier mit einer entsprechend ausgebildeten Ritzelwelle zusammen.

Die Anschlussplatte weist dabei eine Bohrung für die Aufnahme eines Teils der Ritzelwelle auf. In diese Bohrung münden Kanäle, welche in Verbindung mit einer Druckmittelquelle stehen. Die Ritzelwelle besitzt in diesem Bereich Ringkanäle, die in Gebrauchslage in Verbindung mit den von der Anschlussplatte in die Bohrung mündenden Kanäle stehen. Von den Ringkanälen führen wiederum Bohrungen in axial angeordnete Kanäle, welche die Ritzelwelle durchziehen. Die axial angeordneten Kanäle münden in die Trägerplatte bzw. in ein Anschlussstück andernends der Ritzelwelle. Durch diese Anordnung ist es möglich, Greifer oder ähnliche durch Druckmedium zu versorgende Arbeitseinheiten auf der Trägerplatte anzubringen, ohne dass externe Schlauchverbindungen notwendig sind.

Die Haupterfindungsgedanken einer Dreheinheit dieser Art liegen vor allem einerseits in der Veränderbarkeit des Abstandes von Zahnstange und Ritzelwelle gegeneinander und andererseits in der Anordnung und im Zusammenwirken von Mitnehmer und Endlagenanschlag. Durch diese Einrichtungen arbeitet eine entsprechende Dreheinheit sehr exakt und ist universell einsetzbar. Ihre Baulänge kann entsprechend kompakt gehalten werden.

Weitere Vorteile, Merkmale und Einzelheiten der Erfindung ergeben sich aus der nachfolgenden Beschreibung bevorzugter Ausführungsbeispiele, sowie anhand der Zeichnung; diese zeigt in

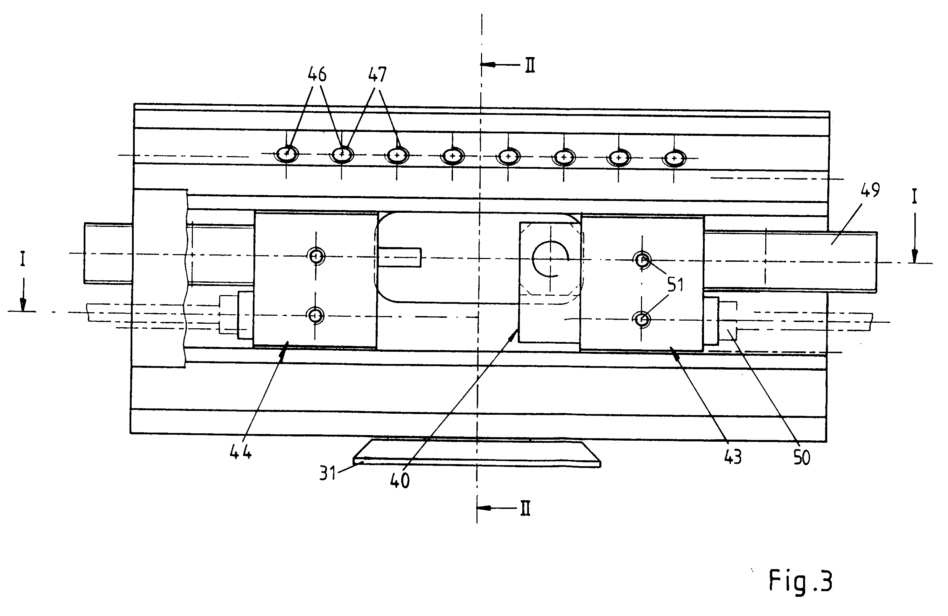

Figur 1 einen Längsschnitt durch eine erfindungsgemässe Dreheinheit entlang einer Linie I-I in Figur 3;

Figur 2 einen Querschnitt durch die Dreheinheit entlang einer Linie II-II in Figur 3;

Figur 3 eine Draufsicht auf die Unterseite der Dreheinheit gemäss Figur 1.

Figur 4 einen Längsschnitt durch ein Anbauelement an die Dreheinheit gemäss Figur 1 entlang einer Linie IV-IV in Figur 5;

Figur 5 eine teilweise gebrochene Draufsicht auf das Anbauelement gemäss Figur 4;

Figur 6 einen Querschnitt durch die Dreheinheit gemäss Figur 1 mit einem unteren Anbauelement entlang einer Linie VI-VI in Figur 7;

Figur 7 eine Draufsicht auf die Dreheinheit gemäss Figur 6.

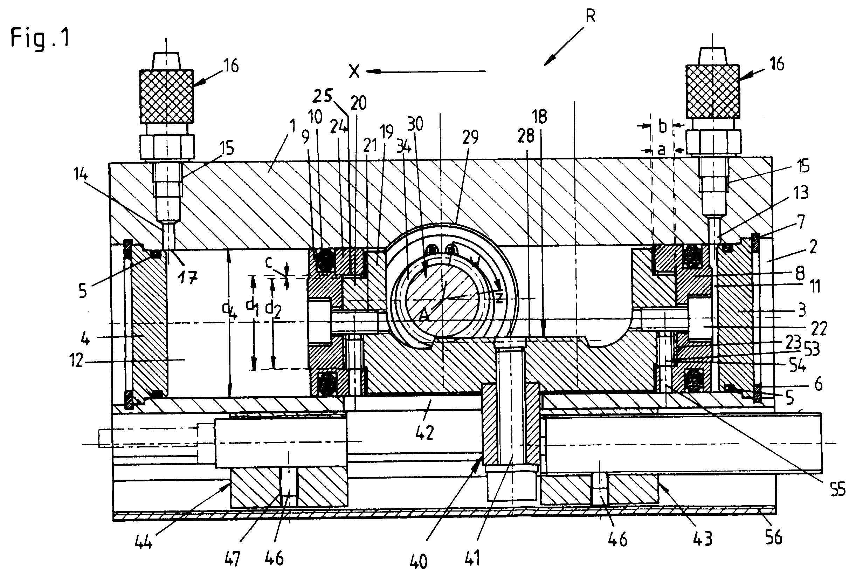

Gemäss Figur 1 besitzt eine erfindungsgemässe Dreheinheit R ein Gehäuse 1 mit einer Zylinderbohrung 2. Die Zylinderbohrung 2 ist jeweils durch einen Deckel 3 und einen Deckel 4 luftdicht verschlossen. Für die Dichtigkeit sorgen in die Randseiten der Deckel 3 und 4 eingelassene Dichtringe 5, während Sicherungsringe 6, welche in speziell dafür in der Zylinderbohrung 2 vorgesehenen Ringnuten 7 eingelegt sind, für einen sicheren Sitz sorgen.

Andererseits der Deckel 3 bzw. 4 sind innerhalb der Zylinderbohrung 2 Kolben 8 bzw. 9 angeordnet. Diese Kolben 8 bzw. 9 schliessen mittels Dichtringen 10 zu Kammern 11 bzw. 12 hin luftdicht ab.

Durch diese Anordnung entsteht zwischen Deckel 3 und Kolben 8 und zwischen Deckel 4 und Kolben 9 jeweils die Kammer 11 bzw. 12. In diese Kammern 11 bzw. 12 führt jeweils ein Kanal 13 bzw. 14 für die Zufuhr eines Druckmediums, wie beispielsweise Druckluft. Die Kanäle 13 bzw. 14 sind mit Gewindebohrungen 15 zur Aufnahme von Schlauchverbindungen 16 für den Anschluss an eine Druckmittelquelle ausgestattet. Die Kolben 8 und 9 sind an ihren den Deckeln 3 und 4 zugewandten Seiten mit einem Vorsprung belegt, so dass beim Anschlagen der Kolben 8 und 9 auf die Deckel 3 und 4 die Einströmöffnungen 17 der Kanäle 13 und 14 nicht überfahren werden.

Zwischen den Kolben 8 und 9 ist eine Zahnstange 18 angeordnet, welche zwei scheibenartige Flanken 19 besitzt, denen wiederum Zapfen 20 angeformt sind.

In die Zapfen 20 sind zentrale Gewindebohrungen 21 eingeformt, in welche Gewindebolzen 22, die zuvor die Kolben 8 und 9 durchdringen, eingreifen und so die Zahnstange 18 fest mit den Kolben 8 und 9 verbinden, jedoch eine Relativbewegung zwischen Zahnstange 18 und Kolben 8 und 9 zulassen. Dabei ragen die Zapfen 20 in Ausnehmungen 23 der Kolben 8 und 9, wobei die Tiefe a der Ausnehmung 23 der Länge b des Zapfens 20 etwa entspricht. Durch die Ausnehmung 23 bildet der Kolben 8 bzw. 9 in diesem Bereich einen Ringkragen 24 aus, welcher zum Zapfen 20 hin eine Innenwand 25 besitzt. Der Durchmesser $d_1$ der Ausnehmung 23 ist jedoch etwas grösser als der Durchmesser $d_2$ der Zapfen 20, so dass zwischen Zapfen 20 und Innenwand 25 ein Spiel in der Breite c entsteht.

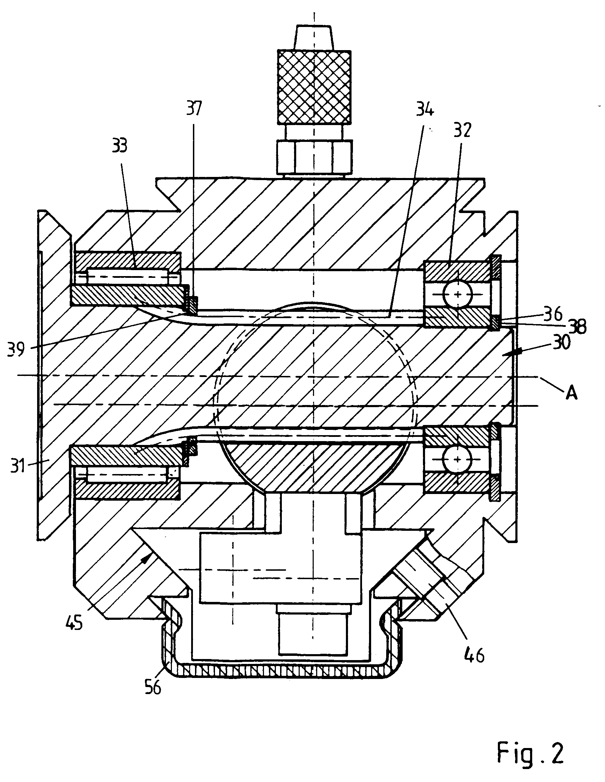

Zwischen den scheibenartigen Flanken 19 ist die eigentliche Zahnung 28 der Zahnstange 18 eingeformt. Die Zahnstange 18 passt sich, wie besonders in Figur 2 sichtbar, querschnittlich in ihrer äusseren Form der Zylinderbohrung 2 im Gehäuse 1 an, wobei allerdings die Flanken 19 ebenfalls mit Spiel geführt sind.

Senkrecht zur Zahnebene 28 weist das Gehäuse 1 etwa in der Mitte der Zylinderbohrung eine Querbohrung 29 auf. Diese Querbohrung 29 wird von einer Ritzelwelle 30 durchdrungen, welche auf einer Seite aus dem Gehäuse 1 herausragt. Dort ist sie mit einer Trägerscheibe 31, welche vorzugsweise eine kegelstumpfartige Form aufweist, versehen. Die Ritzelwelle 30 ist einerseits in einem Rillenkugellager 32 und andererseits in einem Nadellager 33 drehbar gelagert.

In dem Bereich zwischen dem Rillenkugellager 32 und dem Nadellager 33 besitzt die Ritzelwelle 30 eine Zahnung in Form von Längsleisten 34, welche in die Zahnung 28 der Zahnstange 18 eingreifen.

Die Sicherung für die Festlegung der Ritzelwelle 30 in der Bohrung 29 erfolgt durch Sicherungsringe 36 bzw. 37, welche in dafür vorgesehene Ringnuten 38 bzw. 39 eingreifen.

Wird nun ein Druckmittel beispielsweise über den Kanal 13 in die Kammer 11 eingeführt, so wird der Kolben 8 und damit zwangsläufig auch die Zahnstange 18 in Richtung x bewegt. Deren Zahnung 28 kämmt dabei die Längsleisten 34 der Ritzelwelle 30 und erzwingt eine Drehung der Ritzelwelle 30 um ihre Längsachse A in Richtung Z. Ein Drehwinkel w wird dabei von der Länge des Hubes der Kolben/Zahnstangeneinheit bestimmt. Während dieses Vorganges wird Druckmedium aus der Kammer 12 durch die Einströmöffnung 17 hinausgepresst.

Um diese Bewegung rückgängig zu machen, strömt umgekehrt durch die Einströmöffnung 17 Druckmittel in die Kammer 12, wodurch der Kolben 9 mit der Zahnstange 18 entgegen der Richtung x bewegt wird. Jetzt dient der Kanal 13 als Auslass für das in der Kammer 11 befindliche Druckmedium. Die Zahnung 28 läuft wiederum die Ritzelwelle 30 ab und erzwingt so die entgegengesetzte Drehbewegung zur Drehrichtung Z. Die Trägerscheibe 31 hat in Endlage die Ausgangsstellung wieder eingenommen.

Zu einer individuellen Festlegung des Drehwinkels w der Ritzelwelle 30 um ihre Achse A ist die Länge des Hubes innerhalb eines bestimmten Bereiches begrenzbar. Dazu ist der Zahnstange 18 entgegengesetzt ihrer Zahnung 28 ein Mitnehmer 40 mittels eines Gewindebolzens 41 zugeordnet. Der Mitnehmer 40 durchragt dabei einen in das Gehäuse 1 eingebrachten Schlitz 42, welcher in etwa die Form eines Langloches aufweist. Dem Mitnehmer 40 sind beidseitig Anschläge 43 und 44 für die Festlegung einer Endlage zugeordnet.

Auf der Seite der Anschläge 43 und 44 besitzt das Gehäuse 1 eine querschnittlich schwalbenschwanzförmige Führung 45. Entsprechend dieser schwalbenschwanzförmigen Führung 45 sind auch die Anschläge 43 und 44 ausgeformt, wobei sie in der Führung 45 verschiebbar sind. Zur endgültigen Festlegung der Anschläge 43 und 44 dienen Gewindestifte 46, welche durch entsprechende Gewindebohrungen 47 in das Gehäuse 1 einragen. Sie drücken den Anschlag 43 bzw. 44 in die Führung 45 und klemmen ihn so fest. Die Anschläge 43 und 44 können an beliebiger Stelle innerhalb der Führung 45 und insbesondere im Bereich des Schlitzes 42 festgelegt werden.

Der gegenseitige Abstand der beiden Anschläge 43 und 44 bestimmt die Grösse des Drehwinkels w der Ritzelwelle 30 bei der Drehung Z um die Achse A.

Um eine gedämpfte Bremsung der Hubbewegung zu erreichen, sind in den Anschlägen 43 bzw. 44 Stossdämpfer 49 integriert. Die Stossdämpfer 49 sind dafür in entsprechenden Kanälen bzw. Halterungen innerhalb der Anschläge 43 bzw. 44 klemmend festgelegt. Die Klemmung erfolgt durch Gewindestifte 51.

Ebenfalls in die Anschläge 43 bzw. 44 integriert sind Näherungsschalter 50, welche durch Gewindestifte 51 in ihrer Lage gesichert werden. Die Näherungsschalter 50 übernehmen die Aufgabe der Endlagenkontrolle. Werden somit die Anschläge 43 bzw. 44 in ihrer Lage verschoben, verschieben sich Stossdämpfer 49 bzw. Näherungsschalter 50 automatisch mit.

Die Stossdämpfer 49 sorgen für ein gedämpftes und ruckfreies Aufschlagen des Mitnehmers 40 auf dem Anschlag 43 bzw. 44.

Da bei Dreheinheiten dieser Art eine hohe Massgenauigkeit in Bezug auf ablaufende Strecken bzw. Drehbewegungen verlangt ist, muss gewährleistet sein, dass die Zahnung 28 die Ritzelwelle 30 ohne Spiel zwischen den Längsleisten 34 abläuft. Um dieses Spiel auszuschalten, besitzen die Zapfen 20 Bohrungen 53 für Gewindestife 54. Diese Gewindestifte sind für ein entsprechendes Schraubwerkzeug durch den Schlitz 42 und über Bohrungen 55 durch den Ringkragen 24 der Kolben 8 und 9 zugänglich.

Mit Hilfe der Gewindestifte 54 kann durch entsprechendes Verdrehen die gesamte Zahnstange 18 innerhalb des Abstandes c gegen die Längsleisten 34 der Ritzelwelle 30 angehoben werden, insbesondere durch Herausdrehen der Gewindestifte 54 aus dem Zapfen 20, wobei sich die Gewindestifte 54 dann mit den Rändern der Stirnfläche gegen die Innenwand 25 der Ringkragen 24 im Bereich der Bohrung 55 abstützen. Etwaige auftretende Toleranzen zwischen den Längsleisten 34 von Ritzelwelle 30 und der Zahnung 28 der Zahnstange 18 sind so schnell und leicht ausgleichbar.

Zum Schutz vor Staub und insbesondere zum Schutz von ungewollter Berührung mit den Fingern ist die Führung 45 im Bereich der Anschläge über die gesamte Länge mit einer Schutzabdeckung 56 versehen.

Eine weitere Verbesserung für eine erfindungsgemässe Dreheinrichtung R bedeutet die Möglichkeit der Anbringung eines Anbauelementes für einen Zwischenanschlag P.

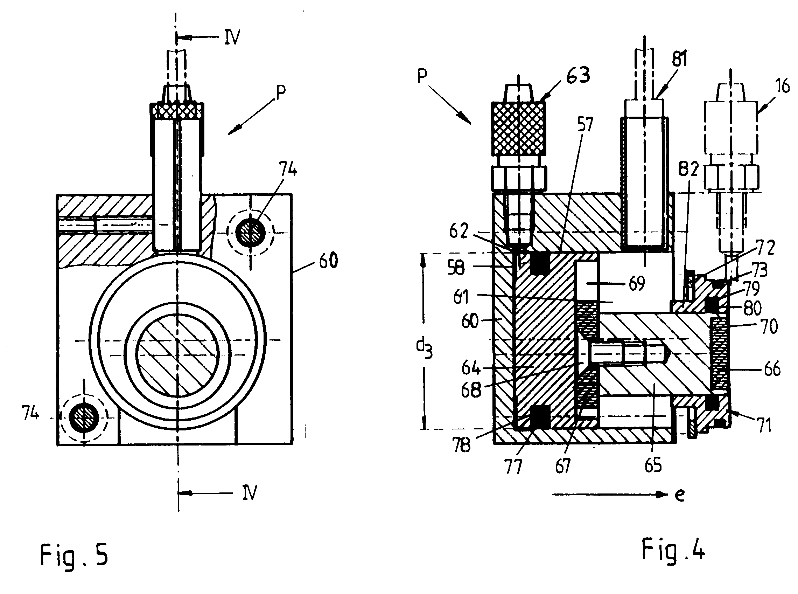

Ein erfindungsgemässer Zwischenanschlag besteht gemäss Figur 4 und 5 aus einem Gehäuse 60, welches einen Innenzylinder 57 aufweist. In diesem Innenzylinder 57 gleitet ein Kolben 64, der einerseits einen Druckraum 58 und andererseits eine Kammer 61 begrenzt. In den Druckraum 58 führt ein Kanal 62, in welchen zur Zuführung eines Druckmittels eine entsprechende Schlauchverbindung 63 eingeschraubt ist. Das Druckmittel wird für die Bewegung des Kolbens 64, in Richtung e benötigt. Dem Kolben 64 ist eine Kolbenstange 65 zugeordnet. Die Kolbenstange 65 ist auf beiden Stirnseiten mit je einer Dämpfungsscheibe 66 bzw. 67 belegt, wobei die Dämpfungsscheibe 67 mittels einer Senkkopfschraube 68 auf der einen Stirnseite der Kolbenstange 65 festliegt und innerhalb einer Ausnehmung 69 dem Kolben 64 anliegt. Die Dämpfungsscheibe 66 ist in einer entsprechenden Ausnehmung 70 in der Kolbenstange 65 festgelegt und zwar so, dass sie einwenig über die Stirnfläche der Kolbenstange 65 hinaussteht. Die Kolbenstange 65 durchfährt einen Spezialdeckel 71, welcher bei Verwendung des erfindungsgemässen Zwischenanschlages P in der Dreheinheit R anstelle des Deckels 3 bzw. 4 in Figur 1 tritt.

Der Spezialdeckel 71 ist ebenfalls durch Sicherungsringe 72 eindeutig festgelegt und durch einen Dichtungsring 73 gegen die Innenwand der Zylinderbohrung 2 abgedichtet.

Der gesamte Zwischenanschlag P wird mittels beispielsweise zylindrischen Schrauben 74 am Gehäuse 1 der Dreheinheit R festgelegt.

Damit das Druckmittel einströmen kann, bzw. damit der Kolben 64 den Kanal 62 nicht voll überfährt und somit verschliesst, besitzt der Kolben 64 ebenfalls einen stufenförmigen Vorsprung. Zur Abdichtung des Druckraumes 58 besitzt der Kolben 64 einen Dichtring 77, der in einer speziell dafür im Kolben 64 angebrachte Ringnut 78 liegt. Auch im Spezialdeckel 71 ist in einer Ringnut 79 ein Dichtring 80 zur Abdichtung gegen die Kolbenstange 65 eingelegt.

Der Durchmesser $d_3$ des Kolbens 64 ist dabei grösser als der Durchmesser $d_4$ des Kolbens 8 bzw. 9 der Dreheinheit R. Hierdurch wird gewährleistet, dass der Druck im Druckraum 58 einen Zwischenanschlag des Kolben 8 bzw. auf der Stirnfläche der Kolbenstange 65 auffängt.

Die Länge des Hubes des Kolbens 64 in Richtung e markiert in Gebrauchslage einen ersten Anschlag für den Kolben 8 bzw. 9 und somit eine erste Arbeitsposition die einen Greifer od. dgl. aufnehmende Trägerscheibe 31.

Die Scheiben 66 bzw. 67 dienen als Auffahrdämpfer der Kolbenstange 65 auf die Kolben 8 oder 9 bzw. des Kolbens 64 auf die Kolbenstange 65. Der Näherungsschalter 81 meldet der Steuerung das Erreichen der Zwischenposition.

Nach Beendigung des Arbeitsvorganges in dieser Position wird der Kolben 64 durch den Kolben 8 oder 9 in seine Ausgangsstellung zurückgedrückt. Zuvor ist dafür gesorgt, dass das Druckmittel aus dem Druckraum 58 durch den Kanal 62 ausströmen kann.

Damit kann eine weitere Arbeitsposition erreicht werden, welche, wie oben beschrieben, durch den Mitnehmer 40 und die Anschläge 43 bzw. 44 in ihrer Endlage bestimmt wird.

Eine weitere Verbesserung einer erfindungsgemässen Dreheinheit R besteht darin, dass für einen auf der Trägerscheibe 31 aufgebrachten Greifer od. dgl. die Pneumatik- oder Hydraulikversorgung in der Ritzelwelle 30 integriert ist statt über extern angebrachte Schläuche.

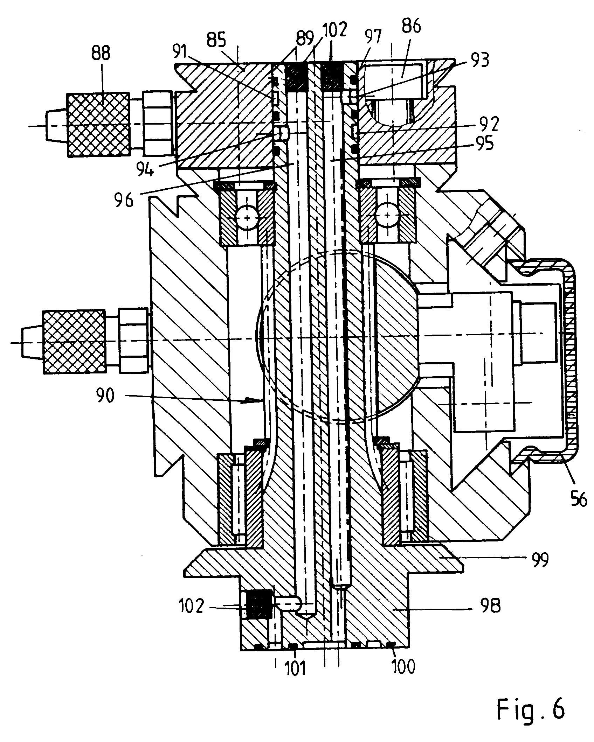

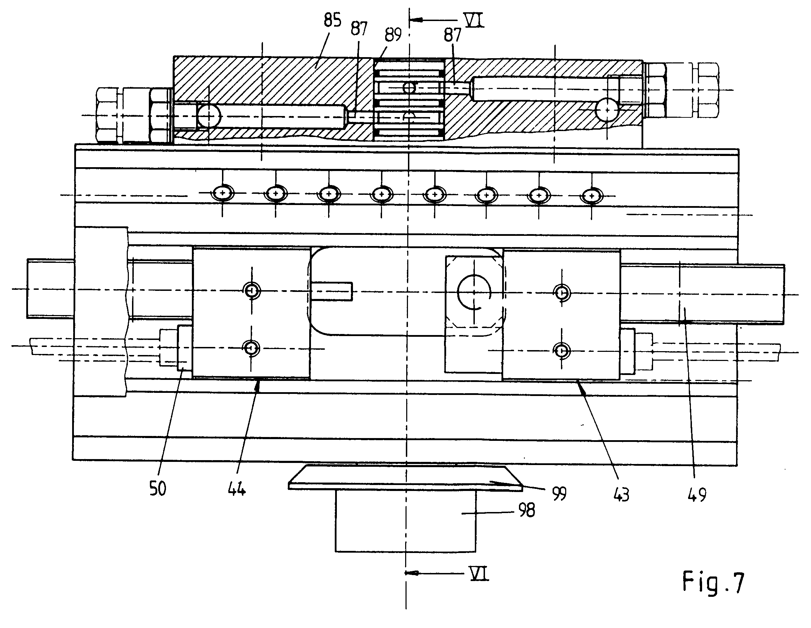

Gemäss Figur 6 und 7 wird dazu einer Dreheinheit R eine Anschlussplatte 85, bevorzugt durch zylindrische Schraubenbolzen 86 od. dgl., angeschraubt. In einer solchen Anschlussplatte 85 sind Kanäle 87 für die Zufuhr bzw. Abfuhr von Druckmittel vorgesehen. Das Druckmittel gelangt über einen entsprechenden Schlauchanschluss 88 in die Kanäle 87. Die Kanäle 87 münden in eine Bohrung 89, in welche eine spezielle ausgeformte und verlängerte Ritzelwelle 90 eingreift. Die Ritzelwelle 90 ist in dem Bereich mit Ringkanälen 91 bzw. 92 versehen, wobei jeder der Ringkanäle 91 bzw. 92 eine Bohrung 93 bzw. 94 zu in der Ritzelwelle 90 axial verlaufenden Kanälen 95 bzw. 96 aufweist. Die Ringkanäle 91 und 92 sind nach aussen sowie untereinander und gegen die Innenwand der Bohrung 89 durch Dichtungsringe 97 abgedichtet.

Die in der Ritzelwelle 90 axial verlaufenden Kanäle 95 und 96 münden aus einem Anschlußstück 98 für einen beispielsweise durch ein Druckmedium betriebenen Greifer od. dgl., an einer Trägerplatte 99.

| | P O S I T I O N S Z A H L E N L I S T E | | | | |
|---|---|---|---|---|---|
| 1 | Gehäuse | 34 | Längsleisten | a | tiefe Ausnehmung |
| 2 | Zylinderbohrung | 35 | | b | Länge Zapfen |
| 3 | Deckel | 36 | Sicherungsring | c | Breite Spiel |
| 4 | " | 37 | " | $d_1$ | Durchmesser Ausn. |
| 5 | Dichtring | 38 | Ringnuten | $d_2$ | Durchmeser Zapfen |
| 6 | Sicherungsring | 39 | " | x | Richtung |
| 7 | Ringnuten | 40 | Mitnehmer | A | Längsachse |
| 8 | Kolben | 41 | Gweindebolzen | Z | Drehrichtung |
| 9 | " | 42 | Schlitz | W | Drehwinkel |
| 10 | Dichtring | 43 | Anschlag | e | Richtung |
| 11 | Kammer | 44 | " | P | Zwischenanlage |
| 12 | " | 45 | Führung | | |
| 13 | Kanal | 46 | Gewindestift | | |
| 14 | " | 47 | Gewindebohrung | | |
| 15 | Gewindebohrung | 48 | | | |
| 16 | Schlauchverbindung | 49 | Stoßdämpfer | | |
| 17 | Einströmöffnung | 50 | Näherungsschalter | | |
| 18 | Zahnstange | 51 | Gewindestift | | |
| 19 | Flanken | 52 | | | |
| 20 | Zapfen | 53 | Bohrung | | |
| 21 | Gewindebohrung | 54 | Gewindestift | | |
| 22 | Gewindebolzen | 55 | Bohrung | | |
| 23 | Ausnehmung | 56 | Schutzabdeckung | | |
| 24 | Ringkragen | 57 | Innenzylinder | | |
| 25 | Innenwand | 58 | Druckraum | | |
| 26 | | 59 | | | |
| 27 | | 60 | Gehäuse | | |
| 28 | Zahnung | 61 | Kammer | | |
| 29 | Querbohrung | 62 | Kanal | | |
| 30 | Ritzelwelle | 63 | Schlauchverbindung | | |
| 31 | Trägerscheibe | 64 | Kolben | | |
| 32 | Rollenkugellager | 65 | Kolbenstange | | |
| 33 | Nadellager | 66 | Dämpfungsscheibe | | |

| P O S I T I O N S Z A H L E N L I S T E | | | |
|---|---|---|---|
| 67 Dämpfungsscheibe | 100 Dichtring | | |
| 68 Senkkopfschraube | 101 " | | |
| 69 Ausnehmung | 102 Stopfen | | |
| 70 Ausnehmung | | | |
| 71 Spezialdeckel | | | |
| 72 Sicherungsring | | | |
| 73 Dichtungsring | | | |
| 74 Zyl. Schraube | | | |
| 75 | | | |
| 76 | | | |
| 77 Dichtring | | | |
| 78 Ringnut | | | |
| 79 " | | | |
| 80 Dichtring | | | |
| 81 Näherungsschalter | | | |
| 82 Ringkragen | | | |
| 85 Anschlußplatte | | | |
| 86 Schraubenbolzen | | | |
| 87 Kanal | | | |
| 88 Schlauchanschluß | | | |
| 89 Bohrung | | | |
| 90 Ritzelwelle | | | |
| 91 Ringkanal | | | |
| 92 Ringkanal | | | |
| 93 Bohrung | | | |
| 94 " | | | |
| 95 Kanal | | | |
| 96 " | | | |
| 97 Dichtungsring | | | |
| 98 Anschlußstück | | | |
| 99 Trägerplatte | | | |

Für einen luftdichten Verschluss zwischen Anschlussstück 98 und Greifer od. dgl. sorgen im Anschlussstück 98 eingebrachte Dichtungsringe 100 und 101.

Verschlussstopfen 102 verschliessen Hilfsbohrungen für die Herstellung der druckmittelführenden Kanäle 95 und 96.

Die Ritzelwelle 90 entspricht in ihrem äusseren Bau der oben beschriebenen Ritzelwelle 30 und ist innerhalb der Dreheinheit wie die Ritzelwelle 30 gelagert und entsprechend steuerbar.

**Patentansprüche**

1. Vorrichtung zum Drehen von beispielsweise zu bearbeitenden Werkstücken an einem Träger, welcher von einer Ritzelwelle mit Zahnleisten über eine Zahnstange in Drehung versetzbar ist, wobei die Zahnstange in einer Zylinderbohrung eines Gehäuses gleitbar zwischen die Zylinderbohrung verschliessenden Deckel senkrecht zu einer Achse der Ritzelwelle angeordnet ist und jeweils an der Zahnstange an jedem Ende vorgesehene Kolben mit einem Deckel eine mit Druckmedium beaufschlagbare Kammer ausbilden und wobei die Zahnleisten der Ritzelwelle die Zahnung der Zahnstange zwischen den beiden Kolben kämmen,

dadurch gekennzeichnet,

dass der Abstand von Zahnung (28) und Ritzelwelle (30, 90) bzw. Zahnleisten (34) veränderbar ist.

2. Vorrichtung zum Drehen von beispielweise zu bearbeitenden Werkstücken an einem Träger, welcher von einer Ritzelwelle mit Zahnleisten über eine Zahnstange in Drehung versetzbar ist, wobei die Zahnstange in einer Zylinderbohrung eines Gehäuses gleitbar zwischen die Zylinderbohrung verschliessenden Deckel senkrecht zu einer Achse der Ritzelwelle angeordnet ist und jeweils an der Zahnstange an jedem Ende vorgesehene Kolben mit einem Deckel eine mit Druckmedium beaufschlagbare Kammer ausbilden und wobei die Ritzelwelle die Zahnung der Zahnstange zwischen den beiden Kolben kämmen, dadurch gekennzeichnet, dass zumindest ein Anschlag (43, 44) dem Gehäuse (1) angesetzt ist, der mit einem von der Zahnstange (18) abragenden Mitnehmer (40) zusammenwirkt.

3. Vorrichtung nach Anspruch 2, dadurch gekennzeichnet, dass der Mitnehmer (40) einen Schlitz (42) in dem Gehäuse (1) durchsetzt und beidseits des Mitnehmers (40) die Anschläge (43, 44) angeordnet sind.

4. Vorrichtung nach Anspruch 2 oder 3, dadurch gekennzeichnet, dass der Anschlag (43, 44) aus einem Halter für einen Stossdämpfer (49) und/oder einen Näherungsschalter (50) besteht.

5. Vorrichtung nach Anspruch 4, dadurch gekennzeichnet, dass der Halter in einer nutartigen Führung (45) im Gehäuse (1) gleitet und durch beispielsweise Gewindestifte (46) festlegbar ist.

6. Vorrichtung nach wenigstens einem der Ansprüche 1 bis 5, dadurch gekennzeichnet, dass die Zahnstange (18) mit einem Zapfen (20) in einer Ausnehmung (23) des Kolbens (8 bzw. 9) eingreift, wobei der Zapfen (20) mit randseitigem Spiel (c) in der Ausnehmung (23) angeordnet ist.

7. Vorrichtung nach Anspruch 6, dadurch gekennzeichnet, dass in dem Zapfen (20) ein Gewindestift (54) sitzt, der sich mit einem Rand seiner Stirnfläche gegen eine Schulter (25) eines Ringkragens (24) abstützt.

8. Vorrichtung nach Anspruch 7, dadurch gekennzeichnet, dass zur Stirnfläche des Gewindestiftes (54) eine Bohrung (55) durch den die Ausnehmung (23) bildenden Ringkragen (24) führt.

9. Vorrichtung nach wenigstens einem der Ansprüche 1 bis 8, dadurch gekennzeichnet, dass in zumindest eine Kammer (11, 12) ein Zwischenanschlag (P) eingreift.

10. Vorrichtung nach Anspruch 9, dadurch gekennzeichnet, dass eine Kolbenstange (65) einen Deckel (71) durchsetzt und andernends mit einem Kolben (64) verbunden ist, der in einem Innenzylinder (57) gleitet.

11. Vorrichtung nach Anspruch 10, dadurch gekennzeichnet, dass der Kolben (64) jenseits der Kolbenstange (65) mit einem Druckmedium beaufschlagbar ist.

12. Vorrichtung nach Anspruch 10 oder 11, dadurch gekennzeichnet, dass dem Kolben (64) ein Näherungsschalter (81) zugeordnet ist.

13. Vorrichtung nach einem der Ansprüche 10 bis 12, dadurch gekennzeichnet, dass der Durchmesser ($d_3$) des Kolbens (64) grösser ist als der Durchmesser ($d_4$) des Kolbens (8, 9).

**14.** Vorrichtung nach wenigstens einem der Ansprüche 1 bis 13, dadurch gekennzeichnet, dass eine Ritzelwelle (90) andererseits der Trägerplatte (99) in eine Anschlussplatte (85) eingreift und von zumindest einem Kanal (95, 96) zur Führung von Druckmedium axial durchsetzt ist, welcher über einen Ringkanal (91, 92) und Bohrungen (87) in der Anschlußplatte mit einer Druckmittelquelle in Verbindung steht.

Fig.1

Fig. 2

Fig.3

Fig.4

Fig. 5

14

Fig. 6

Fig.7

EP 0 476 280 A2